Europäisches Patentamt

(19) European Patent Office

Office européen des brevets

(11) Veröffentlichungsnummer: **0 025 813**
**B1**

(12) **EUROPÄISCHE PATENTSCHRIFT**

(45) Veröffentlichungstag der Patentschrift:
20.10.82

(21) Anmeldenummer: 80100064.7

(22) Anmeldetag: 07.01.80

(51) Int. Cl.³: **C 02 F 1/24,** B 01 F 5/04

(54) Vorrichtung zur Wasserreinigung und/oder -belüftung durch Entspannungsflotation.

(30) Priorität: 21.09.79 DE 2938264

(43) Veröffentlichungstag der Anmeldung:
01.04.81 Patentblatt 81/13

(45) Bekanntmachung des Hinweises auf die Patenterteilung:
20.10.82 Patentblatt 82/42

(84) Benannte Vertragsstaaten:
AT BE CH FR GB IT LU NL SE

(56) Entgegenhaltungen:
DE-B-1 230 373
DE-B-1 275 512
GB-A-275 778
US-A-3 722 679

(73) Patentinhaber: GKSS-Forschungszentrum Geesthacht GmbH, Reaktorstrasse 7-9,
D-2054 Geesthacht-Tesperhude (DE)

(72) Erfinder: Reinhardt, Karl Horst, Dr. Dipl.-Chem.,
Hamburger Strasse 29, D-2057, Reinbek (DE)
Erfinder: Müller, Heinz Joachim, Blumenstrasse 8,
D-3141 Tespe (DE)

(74) Vertreter: Schöning, Hans-Werner, Dipl.-Ing.,
Adenauerallee 28 (Postfach 102 905),
D-2000 Hamburg 1 (DE)

## Vorrichtung zur Wasserreinigung und/oder -belüftung durch Entspannungsflotation

Die Erfindung betrifft eine Vorrichtung zur Wasserreinigung und/oder -belüftung durch Sättigung des Rohwassers mit einem unter Druck stehenden Gas und anschliessende Entspannung in einem Flotationsgefäss.

Das Abtrennen von Fremdstoffen, bei denen die Neigung zur Phasentrennung wenig ausgeprägt ist, gewinnt mit steigenden Anforderungen an die Qualität von Abwasser und Trinkwasser an Bedeutung. So handelt es sich in der Wassertechnik häufig um das Abtrennen von ungelösten Schwebstoffen oder Öltröpfchen. Auch mit Membranen betriebene Anlagen zur Entsalzung und Reinigung von Wasser können nur dann störungsfrei betrieben werden, wenn in einer vorgeschalteten Verfahrensstufe alle diejenigen Stoffe abgetrennt werden, die auf längere Sicht die Funktion der Membranen beeinträchtigen würden.

Es besteht somit ein Bedarf an zuverlässig arbeitenden Trennverfahren, welche hohe Raumausbeute, hohe Trennleistung, einfache Betriebsweise und niedrige Betriebskosten miteinander verbinden.

Während geringe Reststoffkonzentrationen im Bereich weniger Milligramm/Liter mit Kiesfiltern in Verbindung mit Flockung und Destabilisierung mit Anschwemmfiltern oder Feinfiltern abgetrennt werden, hat für höhere Öl- und Feststoffgehalte, etwa im Bereich der kommunalen Abwassertechnik und der Abwasserreinigung in der Nahrungsmittelindustrie die Flotation an Bedeutung gewonnen. Bei diesem Verfahren werden die suspendierten Stoffe durch feine Luftblasen ausgetragen, die man durch Lösen von Luft unter erhöhtem Druck und anschliessende Entspannung auf Normaldruck oder aber auch durch Elektrolyse des Wassers erzeugt. Die hierfür bisher erforderlichen Einrichtungen machen die Flotation jedoch zu einem relativ teuren Trennverfahren. Dieses bekannte Trennverfahren der Entspannungsflotation wird üblicherweise so betrieben, dass man einen Teilstrom des gereinigten Wassers nach Sättigung in einem Autoklaven, der durch einen Kompressor oder durch Druckgasflaschen mit Gas versorgt wird, entspannt und mit Schmutzwasser vermischt. Das Verfahren selbst gilt als relativ wartungsintensiv und erfordert hohe Investitionskosten wegen des erforderlichen Kompressors und des auf einen entsprechend hohen Druck ausgelegten Autoklaven (vergleiche DE-B-1 230 373).

Aufgabe der vorliegenden Erfindung ist daher die Schaffung einer verbesserten Vorrichtung zur Entspannungsflotation, welche preiswerter betrieben werden kann und vor allem geringere Investitionskosten durch Fortfall des Autoklaven und des Kompressors verursacht.

Gemäss der vorliegenden Erfindung wird das Wasser nicht mit einem Druckbehälter mittels eines Kompressors mit Luft gesättigt. Die erfindungsgemässe Vorrichtung der einleitend genannten Art ist erfindungsgemäss jetzt dadurch gekennzeichnet, dass in Reihenschaltung vor dem Flotationsgefäss eine erste Strahlpumpe, eine Förderpumpe und eine zweite Strahlpumpe angeordnet sind, dass der Produktwasserauslass des Flotationsgefässes über ein Drosselventil mit dem Treibmitteleinlass der ersten Strahlpumpe verbunden ist, deren Sauganschluss als Gasansaugstutzen ausgebildet ist und deren Ausgang den Treibmitteleinlass der zweiten Strahlpumpe speist, welche an ihrem Sauganschluss als Rohwassereinlassstutzen ausgebildet ist.

Eine an sich bekannte Anordnung von zwei in Reihe geschalteten Injektordüsen oder Strahlpumpen, von denen die eine Luft und die andere Rohwasser ansaugt, kann die der Erfindung zugrundeliegende Aufgabe nicht lösen, denn für eine Entspannungsflotation ist es unbedingt erforderlich, dass sich die aus der ersten Strahlpumpe geförderte Luft unter erhöhtem Druck in der Flüssigkeit löst. Damit sich die Luft auflösen kann, ist eine Verweilzeit von einigen hundert Millisekunden erforderlich, die bei der vorbekannten Anordnung keinesfalls gegeben ist. Erst durch die Zwischenschaltung der Förderpumpe ergibt sich eine ausreichend grosse Verweilzeit, so dass am Ausgang der zweiten Strahlpumpe im Rohwasser vollständig gelöste Luft vorliegt, die für die Entspannungsflotation erforderlich ist.

Weitere Merkmale der Erfindung geben die Unteransprüche an.

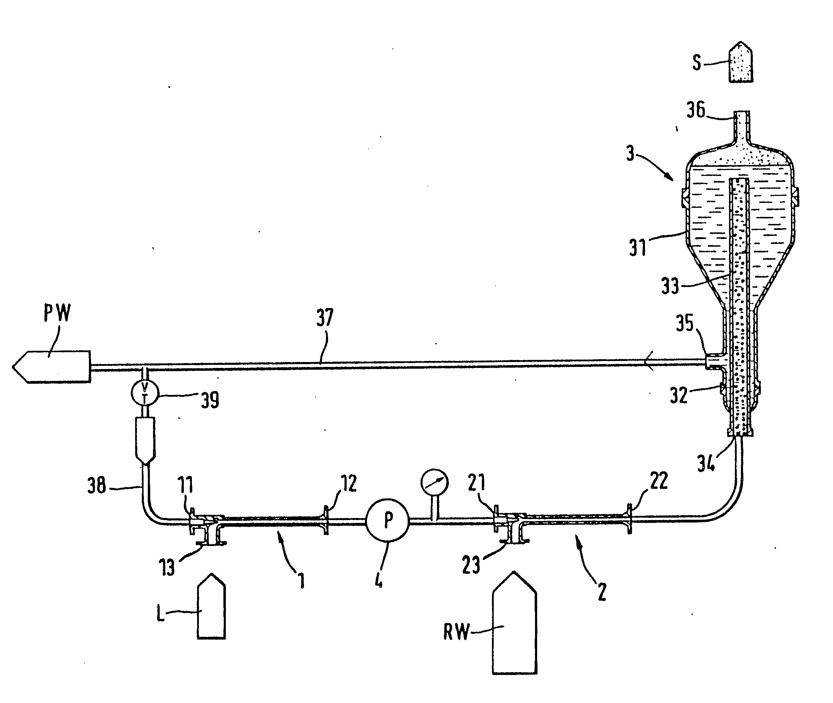

Nachfolgend wird anhand der beigefügten Zeichnung eine Ausführungsform der Erfindung näher erläutert. Die Zeichnung zeigt schematisch das Fliessschema der erfindungsgemässen Flotationsanlage.

Die in der Zeichnung dargestellte Flotationsanlage besteht aus einer ersten Strahlpumpe 1, einer zweiten Strahlpumpe 2, einem Flotationsbehälter 3 und einer Förderpumpe 4.

Das Flotationsgefäss 3 besteht aus einem oberen teils zylindrischen und teils konischen Abschnitt 31, an den sich nach unten ein engerer zylindrischer Abschnitt 32 anschliesst. Von unten ragt in das Flotationsgefäss 3 ein Standrohr 33 hinein, welchem über den Anschluss 34 das mit Gasbläschen beladene zu reinigende flüssige Strömungsmittel zugeführt wird. Im unteren Teil 32 des Flotationsgefässes kann bei 35 das gereinigte Wasser abgezogen werden. Ein im oberen Teil des Flotationsgefässes 3 angeordneter Anschluss 36 gibt die Möglichkeit, die ausgetragenen Fremdstoffe S mit einer Pumpe abzuziehen.

Vom Anschluss 35 wird über eine Leitung 37 das gereinigte Produktwasser abgezogen. Über eine Zweigleitung 38 und einen Strömungsteiler bzw. eine Drossel 39 wird ein Teil des bereits aufbereiteten Wassers dem Treibmitteleinlass 11 der ersten Strahlpumpe 1 zugeführt. Die Ansaugkammer der Strahlpumpe 1 steht über einen Anschluss 13 mit dem für die Flotation benötigten Gas, vorzugsweise mit gereinigter Luft L in Verbindung. Diese Luft löst sich unter dem hinter der Strahlpumpe 1 aufgebauten Druck. Der Ausgang der ersten Strahlpumpe 1, in der die Strömung durch eine zwischengeschaltete Förderpumpe 1 aufrechterhalten wird, steht mit dem Treibmitteleinlass 21 der zweiten Saugpumpe 2 in Verbindung, deren Ansaugkammer über den Sauganschluss 23 das zu reinigende Rohwasser RW empfängt. Der Auslass 22 dieser zweiten Strahlpumpe 2 ist mit dem unteren offenen Ende 34 des Standrohres 33 verbunden. Das bei der Entspannung in der zweiten Strahlpumpe 2 auftretende Druckgefälle dient dem Transport des Rohwassers RW, welches mit feinsten Luftbläschen vermischt wird, die dann im Flotationsgefäss 3 abgetrennt werden können. Die über das Standrohr 33 eintretenden mit Luftbläschen vermischten ungelösten Bestandteile des Wassers werden, wie schon erwähnt, an der oberen Öffnung 36 und das gereinigte Produktwasser PW am unteren Anschluss 35 des Flotationsgefässes 3 abgezogen. Im Betrieb werden die Durchsätze so eingestellt, dass sich im Flotationsgefäss 3 eine stationäre Grenze der Luftbläschen einstellt.

Der Vorteil der erfindungsgemässen Flotationsanlage liegt verglichen mit den bisher bekannten Entspannungsflotations-Anlagen darin, dass der störanfällige und lärmerzeugende Kompressor, sowie der aus Sicherheitsgründen dickwandige Druckbehälter entfallen. Von Vorteil ist für die erfindungsgemässe Anordnung auch, dass der Energieverbrauch niedrig gehalten wird, weil die zum Aufbau des Druckes hinter der ersten Strahlpumpe 1 aufgewandte Energie in der zweiten Strahlpumpe 2 zum Teil zurückgewonnen wird.

Die Einsparung an Investitions- und Betriebskosten im Vergleich zu den herkömmlichen Flotationseinrichtungen legt es nahe, den prinzipiellen Vorteil dieses ohne festes Trennmaterial arbeitende Verfahren für eine Vielzahl von Aufgaben der Wassertechnik zu nutzen, bei denen Trübstoffe, Öle oder Fette abzutrennen sind.

Wenn eine Flüssigkeit mit Gas gesättigt werden soll, ist der Wirkungsgrad beim Eintragen von Luft in die flüssige Phase im allgemeinen gering. Der Transport von Gas aus der Luftblase heraus wird überdies durch oberflächenaktive Stoffe behindert. So kommt es, dass in biologischen Kläranlagen mit Oberflächenbelüftung die Sauerstoffabmagerung der Belebungsluft nur 1–2% beträgt.

Bei der erfindungsgemässen Vorrichtung bewirken die beiden hintereinandergeschalteten Strahlpumpen eine besonders effektive Verteilung von Gasen in Flüssigkeiten, weil der bei der Entspannung zugeführte Wasserstrom so eingestellt werden kann, dass hinter der zweiten Strahlpumpe keine Luftbläschen mehr auftreten, so dass das Wasser dann mit Luft gesättigt ist. Die erhöhte Effektivität des Stoffüberganges ist auf die durch Druckerhöhung beschleunigte Lösungsgeschwindigkeit zwischen den Strahlpumpen und die intensive Vermischung des bei Normaldruck übersättigten und untersättigten Wassers in der zweiten Strahlpumpe zurückzuführen.

So eignet sich die erfindungsgemässe Anordnung von zwei hintereinandergeschalteten Strahlpumpen auch besonders gut zur Belüftung von Kläranlagen und Fischzuchtbecken, wobei die Wasserströme so eingestellt werden können, dass zum Zwecke der Feststoffentfernung ein gewisser Anteil der gelösten Luft in Form von Bläschen austritt. Die Erfindung kann auch als Gaswäscher anstelle einer Gegenstrom-Absorptionskolonne eingesetzt werden, was eine erhebliche Verminderung des Raumbedarfs bedeutet.

**Patentansprüche**

1. Vorrichtung zur Wasserreinigung und/oder -belüftung durch Sättigung des Rohwassers mit einem unter Druck stehenden Gas und anschliessende Entspannung in einem Flotationsgefäss, dadurch gekennzeichnet, dass in Reihenschaltung vor dem Flotationsgefäss (3) eine erste Strahlpumpe (1), eine Förderpumpe (4) und eine zweite Strahlpumpe (2) angeordnet sind, dass der Produktwasserauslass (35) des Flotationsgefässes (3) über ein Drosselventil (39) mit dem Treibmitteleinlass (11) der ersten Strahlpumpe (1) verbunden ist, deren Sauganschluss (13) als Gasansaugstutzen ausgebildet ist und deren Ausgang den Treibmitteleinlass (21) der zweiten Strahlpumpe (2) speist, welche an ihrem Sauganschluss (23) als Rohwassereinlassstutzen ausgebildet ist.

2. Vorrichtung nach Anspruch 1, dadurch gekennzeichnet, dass das Flotationsgefäss (3) konisch ausgebildet ist, ein sich von unten nach oben erstreckendes Standrohr (33) enthält, welches mit dem Auslass (22) der zweiten Strahlpumpe (2) verbunden ist, und im unteren Teil in einem relativ engen, das Standrohr (33) umgebenden Ringraum (32) mit einem Auslass (35) für das Produktwasser versehen ist.

3. Vorrichtung nach Anspruch 1 und 2, dadurch gekennzeichnet, dass das Flotationsgefäss (3) in einem oberen domartigen Abschnitt mit einem Abfluss (36) für das ausgeschwemmte Gut versehen ist.

**Claims**

1. Apparatus for water purification and/or aeration by saturation of the raw water with pressurized gas and subsequently allowing it to depressurize in a floating vessel characterized in that upstream to the flotation vessel (3) there are provided in series a first injector pump (1), a feed pump (4) and a second injector pump (2), and that the product water outlet (35) of the flotation vessel (3) through a throttle valve (39) is connected with the driving medium inlet (11) of the first injector pump (1), the suction inlet of which being designed as a gas suction inlet and the outlet of which feeds the driving medium inlet (21) of the second injector pump (2), the suction inlet (23) of the latter being designed as a raw water inlet.

2. Apparatus according to claim 1 characterized in that the flotation vessel (3) has a conical shape and contains a stand pipe (33) extending upwardly therein from the bottom thereof, said stand pipe (33) being connected with the outlet (22) of the second injector pump (2) and in its lower portion is designed with a relatively narrow annual chamber (32) surrounding said stand pipe (33) and being provided with an outlet (35) for the product water.

3. Apparatus according to claim 1 and 2 characterized in that the flotation vessel (3) being provided with a dome-shaped top, in which there is an outlet (36) for the separated foreign matter.

**Revendications**

1. Installation d'épuration et/ou d'aération par saturation de l'eau brute au moyen d'un gaz sous-pression, suivie d'une phase de détente dans un ballon de flottation, caractérisée par le fait que sont montés en série en amont du ballon de flottation (3) une première pompe à jet (1), une pompe de circulation (4) et une seconde pompe à jet (2), et par le fait que la sortie des eaux traitées (35) du ballon de flottation (3) est raccordée par une soupape d'étranglement (39) à l'entrée du fluide moteur (11) de la première pompe à jet (1) dont le raccord d'aspiration (13) est conformé en tubulure d'aspiration de gaz et dont la sortie alimente l'entrée du fluide moteur (21) de la seconde pompe à jet (2), le raccord d'aspiration (23) de ce dernier étant constitué en tubulure d'entrée d'eau brute.

2. Installation selon la revendication 1, caractérisée par le fait que le ballon de flottation (3) a une forme conique, qu'il contient un tube vertical (33) se raccordant à la sortie (22) de la seconde pompe à jet (2), et qu'il présente à sa partie inférieure, au niveau d'une chambre annulaire (32) relativement étroite et entourant le tube vertical, une sortie (35) pour l'eau traitée.

3. Installation selon l'une quelconque des revendications 1 ou 2, caractérisée par le fait que le ballon de flottation (3) est équipé, à sa partie supérieure en forme de coupole, d'un orifice d'évacuation (36) des produtis éliminés par flottation.